(19) Europäisches Patentamt
European Patent Office
Office européen des brevets

(11) **EP 2 607 849 A1**

(12) **EUROPEAN PATENT APPLICATION**

(43) Date of publication:
**26.06.2013 Bulletin 2013/26**

(51) Int Cl.:
**G01C 19/5712** *(2012.01)* **G01P 15/18** *(2013.01)*

(21) Application number: **11290603.7**

(22) Date of filing: **22.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Tronics Microsystems S.A.**
**38926 Crolles (FR)**

(72) Inventor: **Le Clerc, Jacques**
**26000 Valence (FR)**

(74) Representative: **Roshardt, Werner Alfred et al**
**Keller & Partner**
**Patentanwälte AG Winterthur**
**Bahnhofplatz 18**
**Postfach 2005**
**8401 Winterthur (CH)**

(54) **Multiaxial micro-electronic inertial sensor**

(57) A resonator micro-electronic inertial sensor, preferably a micro-electromechanical system (MEMS) sensor (e.g. a gyro), for detecting linear accelerations and rotation rates in more than one axis comprises:
• a proof-mass system (21.1, ..., 21.4) flexibly suspended above a substrate for performing a rotational in-plane vibration about a central axis (24,)
• a drive electrode system (D1, ..., D4) for driving the proof-mass system (21.1, ..., 21.4) to perform said rotational in-plane vibration,
• and a sensing electrode system (S1, ..., S8) connected to the proof-mass system (21.1, ..., 21.4) for detecting linear accelerations or rotation rates in more than one axis.

Said proof-mass system (21.1, ..., 21.4) has more than two proof-mass elements flexibly coupled (25.1a, 25.1 b) to each other. Each proof-mass element (21.1, 21.2) is directly and flexibly connected (23.1, 25.1a, 25.1 b) to an anchor structure (22) on the substrate (32). The proof-mass elements (21.1, ..., 21.4) are preferably arranged in a ring-shaped configuration between an inner and an outer radius (R1, R2) with respect to the central axis (24).

Fig. 2

**Description**

**Technical field**

The invention refers to a resonator micro-electronic inertial sensor, preferably a micro-electromechanical system (MEMS) sensor (for instance a gyro), for detecting linear accelerations and rotation rates in more than one axis comprising:

a) a proof-mass system flexibly suspended above a substrate for performing a rotational in-plane vibration about a central axis,

b) wherein said proof-mass system has more than two proof-mass elements flexibly coupled to each other,

c) a drive electrode system for driving the proof-mass system to perform said rotational in-plane vibration,

d) a sensing electrode system connected to the proof-mass system for detecting linear accelerations or rotation rates in more than one axis.

The invention also relates to a method for detecting linear accelerations and rotation rates by such a device.

**Background, Prior art**

The concept of detecting accelerations or rotation rates in more than one axis has been known since the beginning of the 1990ies (US 5,065,628, Fraunhofer Gesellschaft). An example of such a multiaxial sensor is shown in WO 03/104823 (Conti Temic Microelectronic) wherein there are several individual masses for forming a sensor for each detection axis.

According to a more advanced technology one single mobile mass is used for detecting acceleration in more than one axis (e.g. EP 0 547 742 B1, Motorola). There are several recent sensor designs where there are two masses connected by a mobile frame. This is illustrated by the following prior art:

- WO 2009/091966 (Custom Sensors & Technologies) discloses a micromachined accelerometer that has one or more proof masses mounted on one or more decoupling frames or on a shuttle such that the proof mass(es) can move along a first (y) axis in response to acceleration along the first axis while being constrained against movement along a second (x) axis. Torsional movement about a third (z) axis perpendicular to the first and second axes is possible in response to acceleration along the second axis.

- EP 2 113 744 A1 (Panasonic) shows another multiaxis acceleration sensor having four mobile masses that can move individually and that are suspended inside a mobile frame. The design is intended to minimize chip area.

- US 2007/0034007 (Cenk Acar) discloses several different designs for a sensor that is responsive to accelerations in all three directions of space. There may be one or two proof-masses which may be supported from the centre or from the periphery.

- US 2011/0340473 (Cenk Acar) discloses a sensor for detecting 6 degrees-of-freedom (three independent accelerations and three independent rotations). The proof-mass (mobile mass) consists of four parts, namely: a y-axis proof-mass section that has two rigidly connected wing portions; a frame that is supported by the y-axis proof-mass section and that surrounds the y-axis proof mass section; and finally two x-axis proof-mass sections supported by the frame and arranged within the frame beneath the y-axis proof mass section.

The MEMS designs proposed by the prior art is not fully satisfactory. For instance, the proof mass of US 2011/0340473 has a very complex structure. Also, the sensitivity in x and y directions is different so that the detection signals have to be treated differently. In addition there is not much room for the drive electrode which is placed on a radial line and in between of the x-axis and y-axis proof-mass sections.

**Summary of the invention**

It is an object of the invention to provide a micro-electromechanical system (MEMS) device for multiaxis acceleration and rotation detection. More specifically, the invention aims at an easily controllable geometric design of the proof-mass system so that the electrode design is straight forward and the sensor signal treatment does not involve complicated compensation algorithms. It is a further object to provide a compact design that can be realized on a small chip area.

According to the invention, the above mentioned objectives are achieved by a resonator micro-electronic gyro for detecting linear accelerations and rotation rates in more than one axis comprising:

a) a proof-mass system flexibly suspended above a substrate for performing a rotational in-plane vibration about a central axis,

b) wherein said proof-mass system has more than two proof-mass elements flexibly coupled to each other,

c) a drive electrode system for driving the proof-mass system to perform said rotational in-plane vibration,

d) a sensing electrode system connected to the proof-mass system for detecting linear accelerations or rotation rates in more than one axis,

e) wherein each proof-mass element is directly and flexibly connected to an anchor structure on the substrate.

All proof-mass elements rotate synchronously about the (common) central axis. The central axis is oriented in z-direction i.e. normal to the plane of the substrate of the MEMS device. As soon as there is an external acceleration or rotation to be measured the masses may change their movement. The change depends on the direction of the (linear) acceleration or of the rotation rate. Due to the flexible coupling of the proof-mass elements, the elements may change their position relative to each other. However, this does not necessarily mean that the masses can perform any movement. The coupling within the proof-mass system may be such that the elements stay in the same common geometric plane even if the plane defined by the proof-mass system is tilted with respect to the plane of the substrate (due to the impact of the external acceleration or rotation).

The sensing electrode system comprises several (i.e. more than two) electrodes. For detecting out-of-plane movements there are sensing electrode layers on the main face of the proof-mass elements (i.e. parallel to the plane of the substrate). They cooperate with electrodes arranged below or above the proof-mass element in the substrate or in a cap wafer of the device. For detecting in-plane movements there are further sensing electrodes, such as interdigitated electrodes (i.e. comb-like electrode structures). How many and which degrees of freedom are detected depends on the position and the type of the electrodes. Linear accelerations and rotation rates may be detected simultaneous. However, it is not excluded from the scope of the invention that the device only detects linear accelerations or only rotation rates. To put it in other words: From the total number of six axes of freedom, namely three linear accelerations and three rotation rates, the device according to the invention detects more than one of these six axes of freedom, and the sensing electrode system is designed to enable detecting the desired (more than one) axes of freedom.

Each proof-mass element is directly and flexibly connected to an anchor structure, which is provided on the substrate. This means that there is no mobile proof-mass frame that does not detect acceleration or rotation but only couples the proof-mass elements of the system. Since the proof-mass elements are directly connected to an anchor structure, a suspension system that provides for the direct and flexible connection, may have a simple design and does not introduce undesirable dependencies between the proof-mass elements.

The invention is preferably implemented by a micro-electromechanical system (MEMS) gyro. The mobile masses are made of the MEMS layer sandwiched between two substrates.

Ring-shaped proof-mass system:

According to a preferred embodiment, the proof-mass elements are arranged in a ring-shaped configuration between an inner and an outer radius with respect to the central axis. Each element may have the form of a sector of a ring and is separated from adjacent proof-mass elements by a gap. All proof-mass elements together define the configuration of the proof-mass system.

It is also possible to use a non-circular shape e.g. a rectangular, hexagonal, octogonal or other regular polygonal shape for the area of the proof-mass system. Since the proof-mass system performs a vibrational movement about the central axis, it goes without saying that the overall shape of the proof-mass system has to have a regular form. Irregularities would disturb the basic vibrational movement.

Anchor structure:

Optionally, the anchor structure to which the proof-mass elements are attached forms a one-piece anchor element. This common anchor piece is typically a post that stands up from the surface of the underlying substrate. The proof-mass elements may be supported above the substrate by beams or arms that extend in-plane from the central post to the proof-mass elements. Such a preferred design has the advantage that the anchor structure is very compact and that the proof-mass elements may vibrate at a relatively large radius from the anchor. Accordingly the impact of the external acceleration or rotation to be measured tends to be big.

The anchor structure may also be established by a plurality of (e.g. smaller) posts instead of a (typically big) common post. Therefore, each proof-mass element may have its own anchor element.

The anchor structure does not necessarily have to be in the centre of the device. The centre of the device defined by the area that is within the inner radius of the ring-shaped proof-mass system. It is also possible to use an anchor structure that is further away from the central axis than the proof-mass elements. Therefore, if the proof-mass system is a ring-shaped structure the anchor structure may be placed outside the ring, i.e. at a radius bigger than the outer radius of the ring-shaped area.

An example for an anchor structure that is arranged outside of the periphery of the mobile mass is known from Fig. 1 and Fig. 4 of US 2007/0034007 or from Fig. 6 of EP 0 547 742 B1. Fig. 3 and Fig. 5 of US 2007/0034007 show examples of anchor structures (i.e. four posts) that are arranged within the periphery of the proof-mass structure. These geometric principles may also be used to place the anchor elements of the invention.

Activating means:

The vibration of the mobile masses is generated by activating electrodes. They may have a comb-like structure. The fingers of the comb may be oriented parallel to the direction of linear acceleration movement. Such electrode structures are known in the prior art. For instance, circumferentially oriented activation electrodes of the invention may have a structure as shown in Figs. 5, 6, 10 of US 5,025,346 (Univ. of California).

If the embodiment has a circular ring-shaped proof-mass system, the activating electrodes are preferably arranged within the inner radius of the proof-mass system. It is also possible to arrange the activating electrodes at the outer periphery of the proof-mass system.

Furthermore, if the proof-mass system is not a closed ring, the activation electrodes may also be arranged in the radial range of the proof-mass system, i.e. in the ring area that is to some extent covered by the proof-mass elements. The prior art cited at the beginning of the specification (e.g. US 2011/030473 A1) shows additional possible embodiments for activation electrodes arranged in the gaps between adjacent proof-mass elements. Such structures may also be used for the invention.

Usually each proof-mass element has its own drive electrode. There may be situations, however, where not each proof-mass element needs its own drive electrode.

Place of drive electrode:

In a preferred embodiment of the invention the drive electrode system is arranged in a radial area within the inner radius of the ring-shaped configuration. In particular, the drive electrode system is arranged in a ring-shaped area defined between the common anchor piece and the proof-mass system. The larger the radius of the ring-shaped proof-mass system is, the bigger the Coriolis effect is. As a consequence, a free centre of the proof-mass system is well suited for the drive electrodes.

In an alternative embodiment, the drive electrode is placed beyond the outer periphery of the proof-mass system. It is also possible to provide a free space within the area of the proof-mass system for the drive electrodes (comparable to the embodiments shown in US 2011/0030473).

Four proof-mass elements:

It is most preferred to use a proof-mass system that consists of four proof-mass elements arranged in a rotational symmetry with respect to the central axis. Two proof-mass elements arranged opposite to each other are used for detecting accelerations in a first in-plane axis and the two further proof-mass elements (also arranged opposite to each other) are used for detecting accelerations in a second in-plane axis. At the same time, two of the proof-mass elements (which are also arranged opposite to each other) may be used for detecting rotation in a first in-plane axis and the remaining two proof-mass elements may be used for detecting rotation in a second in-plane axis. On top of that, the linear acceleration and the rotation rate in a third axis (z-direction) may be detected by using all four proof-mass elements.

Generally speaking, the number of proof-mass elements depends on how many degrees of freedom are to be detected by the sensor. The above mentioned embodiment with four proof-mass elements is designed to detect six degrees of freedom, namely three linear accelerations and three rotation rates. There may be situations where more than four proof-mass elements may be useful. Further more, it is not excluded that the basic feature of the invention (namely that each proof-mass element is directly and flexibly connected to an anchor structure on the substrate) can have advantages for proof-mass systems with only three proof-mass elements.

It is a further preferred aspect of the invention to implement all proof-mass elements in an identical form. That means that they have the same shape (in a top plan view) and the same mass. Additionally, the proof-mass elements are all suspended in the same (identical) way. The combination of these two design options leads to a structure that is particularly easy to control and that produces - on one hand - the same signal strength for all in-plane accelerations and - on the other hand - the same signal strength for all in-plane rotation rates. (The signal strength of the linear and the rotational acceleration movements are not the same.)

Resilient elements:

Preferably, the proof-mass elements are coupled pairwise by resilient elements which allow for individual in-plane movements of the proof-mass elements but which provide a stiff coupling of out-of-plane movements of the proof-mass elements. Due to this type of resilient mechanical coupling of the proof-mass elements the proof-mass system may e.g. expand and contract in the x-y-plane. This is useful for detecting a rotation rate in the z-axis. In principle, the resilient elements allow for any relative in-plane movement of the proof-mass elements.

The resilient elements have a cross-section that is larger in z-direction than in x- or y-direction. If the dimension in z-direction is e.g. at least two times as much as the dimension in x-direction, the element is sufficiently stiff in z-direction so that the proof-mass system per se stays flat even when there are out-of-plane movements.

Supporting elements:

The proof-mass system is suspended above the substrate by supporting elements of a suspension system. These elements may be straight beams or curved beams. "curved" means that the beam follows a polygonal line or a rounded line that departs from a straight line. The supporting elements are designed to allow the proof-mass elements to perform a vibrational rotation about the central axis. In addition, they allow for an out-of-plane oscillation of the whole proof-mass system. Therefore, the supporting elements are flexible transverse to their longitudinal axis.

In a preferred embodiment there are gaps between neighbouring proof-mass elements and the suspension elements are running in the gaps. If there are e.g. four proof-mass elements, there are four gaps separating the proof-mass elements. The gaps typically extend in a radial direction from the central axis and in each gap there is a suspension element, which is preferably a straight beam. This has the advantage that the proof-mass elements can be supported on both sides (inner and outer side).

The gaps may also have a shape that differs from the shape of a straight channel. For instance, the delineations of the gaps may be conical or curved.

Coupling:

It is an optional feature of the invention that the resilient elements are coupled to the suspension elements. The resilient elements may be oriented in a transversal direction with respect to the suspension element and may extend like arms to both sides of the suspension element. In this preferred embodiment the direct connection between each proof-mass element and the anchor structure is realized by the combination of the suspension element, which is fixed with one of its end to the anchor structure, and the resilient element that connects the proof-mass element and the respective suspension element. That is, the flexible elements may be part of the suspension system.

For instance, each pair of adjacent proof-mass elements is connected by two resilient coupling elements each of them being mounted on the suspension element arranged between the two proof-mass elements.

The resilient coupling elements may also be separate from the suspension elements.

Shape of resilient elements:

The resilient elements may have the shape of brackets. That means that the two ends of the resilient element do not point in directly opposite directions. Rather more, the pointing directions of the ends include an angle $\beta$ which is $+180° > \beta > -180°$. Preferably the angle $\beta$ is in the range $+60° > \beta > -60°$. A simple bracket may include a straight backbone part and two straight arm parts extending at 90° from the backbone part so that the angle is $\beta = 0°$.

Preferably, the resilient elements are arranged inside the inner radius or outside the outer radius of the ring-shaped configuration of the proof-mass elements. That means that the resilient elements are not in the gap between adjacent proof-mass elements.

Rotational symmetry:

In most situations the proof-mass elements will be flexibly supported by a suspension system having a rotational symmetry. This has the advantage that the in-plane response of the proof-mass elements is uniform. Most preferably, the rotational symmetry is fourfold.

A mirror-type symmetry of the suspension system is also possible. It is to be pointed out that the basic principle of the invention is not limited to suspension systems with a particular symmetry. In particular, there might be small geometric deviations from a symmetrical design that are not detrimental to a proper detection of the accelerations and rotation rates.

Sensing electrodes

The device is furnished with a sensing electrode system. This system typically comprises at least one (but preferably four) interdigitated electrode structure attached to the proof-mass system for detecting z-axis rotation rates and in-plane accelerations (which both lead to specific in-plane movements of the proof-mass system).
In addition, on each proof-mass element there may be at least two sensing electrodes for detecting in-plane rotation rates and z-axis accelerations (which both lead to specific out-of-plane movements of the proof-mass system). The sensing electrodes of the whole proof-mass system preferably show a rotational symmetry.
Method:

A further object of the invention is to provide a method for detecting linear accelerations and rotation rates in more than one axis based on a resonator micro-electronic gyro of the invention. First of all, the method comprises the step of applying a drive signal with a frequency Fd to the drive electrode so that the proof-mass system is performing a vibrational movement around the central axis. For the purpose of detecting linear accelerations (AX, AY, AZ) and rotation rates (GX, GY, GZ) one or more of the following steps are performed:

a) Detecting a rotation rate GX in an in-plane axis direction by determining a difference between the sensing electrode signals from the proof-mass elements opposite to each other;

$$GX = (\{S2\} + \{S3\}) - (\{S6\} + \{S7\})$$

wherein

{S2} and {S3} are electrical signals from two electrodes on a first proof-mass element,
{S6} and {S7} are electrical signals from two electrodes on a second proof-mass element arranged opposite to the first proof-mass element.

b) Detection of a rotation rate GY (orthogonal to GX) in an in-plane axis direction takes place in an analogous manner to the step a) by determining a difference between the sensing electrode signals from the proof-mass elements opposite to each other:

$$GY = (\{S1\} + \{S8\}) - (\{S4\} + \{S5\})$$

wherein

{S1} and {S8} are electrical signals from two electrodes on a third proof-mass element,
{S4} and {S5} are electrical signals from two electrodes on a fourth proof-mass element arranged opposite to the third proof-mass element.

c) Detecting a rotation rate GZ in an out-of-plane axis normal to in-plane axis by determining a difference between the demodulated sensing electrode signals from the proof-mass elements opposite to each other:

$$GZ = (\{S^*12\} - \{S^*10\}) + (\{S^*9\} - \{S^*11\})$$

wherein

$\{S^*12\}$ and $\{S^*10\}$ are electrical signals from two in-plane detection electrodes on a first and a second proof-mass element arranged opposite to each other,

$\{S^*9\}$ and $\{S^*11\}$ are electrical signals from two in-plane detection electrodes on a third and a fourth proof-mass element arranged opposite to each other.

d) Detecting an acceleration AX in an in-plane axis direction by determining a sum of the demodulated sensing electrode signals from the proof-mass elements opposite to each other

$$AX = (\{S^*9\} + \{S^*11\})$$

wherein

$\{S^*9\}$ and $\{S^*11\}$ are electrical signals (demodulated from the vibration frequency Fd) from two in-plane detection electrodes on a first and a second proof-mass element arranged opposite to each other,

e) Detection of an acceleration AY (orthogonal to AX) in an in-plane axis direction takes place in an analogous manner to the step d) by determining a sum of the demodulated sensing electrode signals from the proof-mass elements opposite to each other

$$AY = (\{S^*10\} + \{S^*12\})$$

wherein

$\{S^*10\}$ and $\{S^*12\}$ are electrical signals (demodulated from the vibration frequency Fd) from two in-plane detection electrodes on a first and a second proof-mass element arranged opposite to each other,

f) Detecting an acceleration AZ in an out-of-plane axis which is normal to the in-plane axes by determining a sum of the sensing electrode signals from all proof-mass elements:

$$AZ = \{S1\} + \{S2\} + \{S3\} + \{S4\} + \{S5\} + \{S6\} + \{S7\} + \{S8\}$$

wherein

$\{S1\}$ to $\{S8\}$ are electrical signals from the electrodes on the proof-mass elements.

Additional preferred features of the invention are shown in the drawings and are explained in the following part of the description.

**Brief description of the drawings**

The accompanying drawings further illustrate the invention and serve to explain the preferred embodiments in combination with the detailed specification:

Fig. 1        a schematic top plan view of a device according to the invention;

Fig. 2        a schematic diagram of a sensor with a ring-shaped proof-mass system;

Fig. 3a, b    a schematic top-plan view of resilient elements;

Fig. 4        a schematic cross-section illustrating displacement due to a rotation rate in x-direction;

Fig. 5        a schematic cross-section illustrating displacement due to a rotation rate in z- direction;

Fig. 6        a schematic cross-section illustrating displacement due to a linear acceleration in x- direction;

Fig. 7        a schematic cross-section illustrating displacement due to a linear acceleration in z- direction.

Generally speaking, like reference numerals refer to identical parts.

**Preferred embodiments**

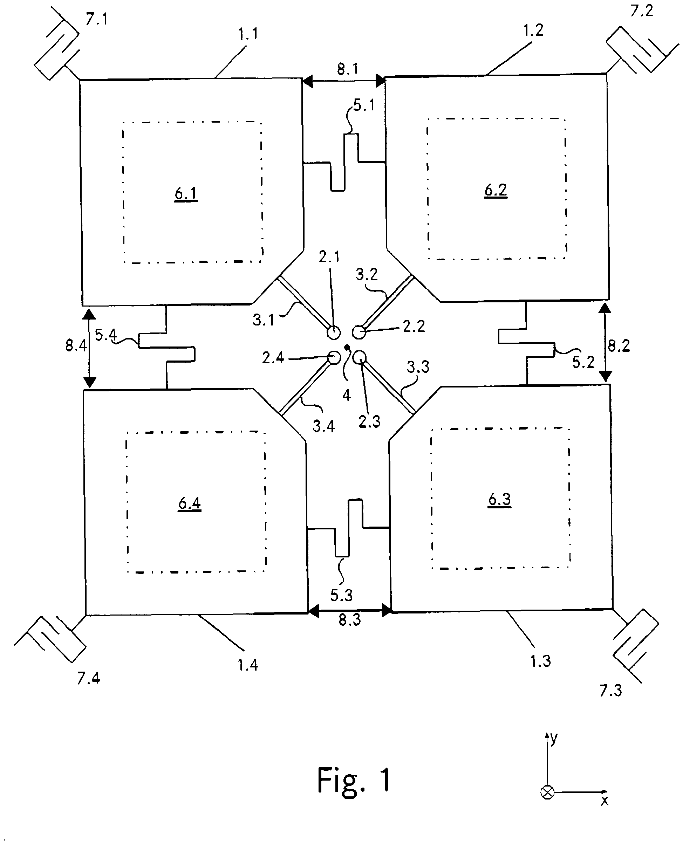

Fig. 1 is a very rough geometric diagram of a first embodiment that serves to illustrate the basic principle and the functional elements that may be used in the scope of the invention.
There are four proof-mass elements 1.1, ..., 1.4, which may have a shape that is more or less a square. The four proof-mass elements 1.1, ..., 1.4 together define the proof-mass system. Each one of the proof-mass elements 1.1, ..., 1.4 is directly connected to an anchor structure. In the present embodiment, the anchor structure comprises four anchor posts 2.1, ..., 2.4 placed close to the centre of the proof-mass system. The anchor posts 2.1, ..., 2.4 rise from the substrate (below the proof-mass elements 1.1, ..., 1.4) to the level of the proof-mass system. Each of the proof-mass elements 1.1, ..., 1.4 is connected to its anchor element 2.1, ..., 2.4 by means of a suspension element 3.1, ..., 3.4. According to the embodiment of Fig. 1 the suspension elements may be straight beams extending in a radial direction from the central axis 4 of the proof-mass system.
Fig. 1 shows the x-y-plane (so called "in-plane") while the z-axis (out-of-plane) is orthogonal to the plane of the proof-mass system. The suspension elements 3.1, ..., 3.4 have a flexibility transverse to their longitudinal direction and in-plane so that the proof-mass elements 1.1, ..., 1.4 can perform a vibrational rotation movement around the central axis 4 when they are activated by a drive system. The drive system is not shown in Fig. 1. It may be realized e.g. by four interdigitated electrode structures, one part of the electrode structure being attached to one of the proof-mass elements 1.1, ..., 1.4 at an appropriate position and the other part being fixed to the substrate.
The proof-mass elements 1.1, ..., 1.4 are pairwise coupled by resilient elements 5.1, ..., 5.4. As shown in Fig. 1, resilient element 5.1 couples the two proof-mass elements 1.1 and 1.2. It is arranged in the gap 8.1 that is formed between neighbouring proof-mass elements 1.1 and 1.2. The resilient elements 5.1, ..., 5.4 may be a beam with several straight sections and with turnarounds between the straight sections. The resilience should only be resilient in the x-y-plane but not in the z-direction (out-of-plane). This may be achieved by choosing a cross-section that is relatively small in an in-plane direction but relatively large (e.g. at least two or at least three times larger) in an out-of-plane direction.
On each proof-mass element 1.1, ..., 1.4 there is an electrode layer 6.1, ..., 6.4 for detecting out-of-plane movements of the respective proof-mass element. Furthermore, there is an interdigitated electrode system 7.1, ..., 7.4 for each one of the four proof-mass elements 1.1, ..., 1.4. Each interdigitated electrode system 7.1, ..., 7.4 is constructed to determine linear movements in on direction in the x-x-plane. As shown in Fig. 1 the electrode systems 7.1, ..., 7.4 may be provided in an area outside of the periphery of the proof-mass system.
While Fig. 1 shows one resilient coupling element per gap, there may be two or more parallel resilient elements in each gap for better coupling the two neighbouring proof-mass elements.
It is to be noted that Fig. 1 is a simplified representation of the genuine geometric design.

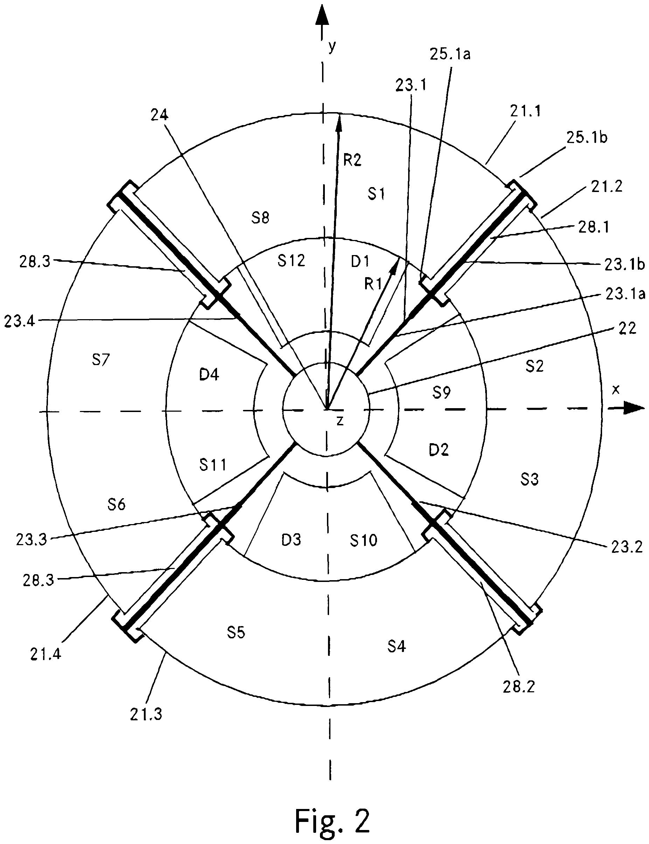

Fig. 2 shows a preferred embodiment with a ring-shaped proof-mass system. There are four proof-mass elements 21.1, ..., 21.4 that form together an annular structure. The inner radius of the ring-shaped area is R1 and the outer radius is R2. The proof-mass elements 21.1, ..., 21.4 are separated by four narrow gaps 28.1, ..., 28.4. The width of each gap 28.1, ..., 28.4. in circumferential direction may be 1/10 or less of the width of one proof-mass element 21.1, ..., 21.4.
An anchor post 22 having a cylindrical form is in the centre of the ring-shaped structure and coaxial to the geometric central axis 24, which is identical to the z-axis. Four straight suspension elements 23.1, ..., 23.4 are fixed to the anchor post 22 and extends outwardly in a radial direction with respect to the central axis 24. They divide the circular area of the sensor into four equal sectors of 90°.
Each of the proof-mass elements 21.1, ..., 21.4 has two sensor electrodes S8/S1, S2/S3, S4/S5, S6/S7 on its main face. Each of the two sensor electrode S8, S1 per proof-mass element 21.1 covers about half of the main surface of the proof-mass element 21.1. The sensor electrodes S1, ..., S8 may have the shape of a 45°-ring-sector.

In the circular area within R1 there are four interdigitated sensor electrodes S9, ..., S12, one for each proof-mass element. Each of the interdigitated sensor electrodes S9, ..., S 12 may occupy an area of about a 45°-ring-sector or less. The first and third interdigitated sensor electrode S9 and S11 have electrode fingers that are oriented (at least approximately) in y-axis direction so that a movement of the proof-mass elements 21.2 and 21.4 in x-axis direction leads to a variation of the electrical capacity and to a corresponding electrical signal. The second and fourth interdigitated sensor electrodes S10 and S 12 are oriented at 90° with respect to the first and third interdigitated sensor electrodes S9 and S11. So, the electrode fingers of the interdigitated sensor electrodes S10 and S12 are oriented in x-axis direction so that a movement of the proof-mass elements 21.3 and 21.1 in y-axis direction leads to a variation of the electrical capacity and to a corresponding signal.

The drive electrode system of Fig. 2 has four drive electrodes D1, ..., D4, which are placed within the area of the radius R1 and are connected to the proof-mass elements 21.1, ..., 21.4. According to the present embodiment the drive electrodes D1, ..., D4 are arranged side-by-side to the interdigitated sensor electrode systems S9, ..., S 12 and occupy an area of the same size as that of the interdigitated sensor electrodes. It is also possible that the interdigitated sensor electrodes S9, ..., S12 and the drive electrodes D1, ..., D4 use areas of mutually different size and shape.

The suspension elements 23.1, ..., 23.4 extend to a radius that is larger than the outer radius R2 of the proof-mass system. Each suspension element 23.1, ..., 23.4 has an inner section 23.1a and an outer section 23.1b. The inner section 23.1a extends from the anchor post 22 to about the inner radius R1 of the ring-shaped proof-mass structure and is resilient not only in in-plane direction but also in out-of-plane direction. In Fig. 2 the inner section 23.1a ends shortly before (i.e. inside) the radius R1. The outer section 23.1b is the part that extends from the end of the inner section 23.1a to the outer end of the suspension element. This section 23.1 b may be less resilient than the inner section 23.1 a.

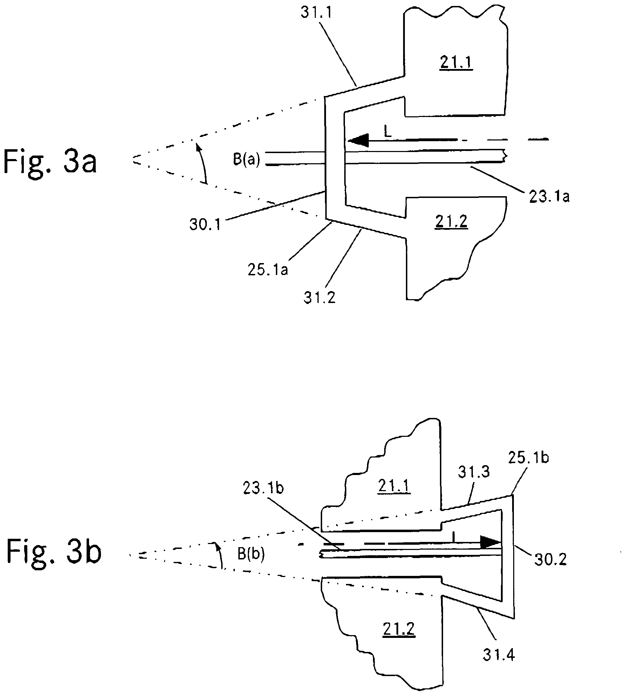

There are two resilient elements 25.1 a, 25.1b attached to the suspension element 23.1. They have the shape of a bracket (Fig. 3a, b). The inner resilient element 25.1 a is attached with the first arm to the first proof-mass element 21.1 and with the second arm to the second proof-mass element 23.1. The first and the second arm are oriented in a radial direction with respect to the central axis 24. As shown in Fig. 2 the first resilient element 25.1 is within the circular area defined by the radius R1. The point of attachment of the resilient element 25.1 a, 25.1 b to the proof-mass elements may be at the borderline to the gap 28.1 (or close to that).

Figs. 3a, 3b show the resilient elements 25.1 a, 25.1b of Fig. 2 in more detail. They substantially consist of a backbone part 30.1, 30.2 and of two arms 31.1, ..., 31.4. In the present embodiment, all parts of the resilient elements 25.1 a, 25.1b are straight beam sections. The two arms 31.1, ..., 31.4 are formed at the two ends of the backbone part 30.1, 30.2 and extend more or less transverse with respect to the orientation of the backbone part 30.1, 30.2. Therefore, the resilient elements 25.1a and 25.1b have a C-shape.

In each case, the middle of the backbone parts 30.1, 30.2 is attached to the outer section 23.1 b of the suspension element. The distance between the points where the backbone parts 30.1, 30.2 are crossing the suspension element 23.1 have a distance from each other that is larger than the difference of the inner and outer radius R1 and R2. According to the present embodiment, the distance L is as follows:

L = (R2 - R1) + L(arm of outer bracket) + L(arm of inner bracket).

"L(arm of inner bracket)" denotes the length of the arms 31.1 and 31.2 and "L(arm of outer bracket)" is the length of the arms 31.3 and 31.4.

The two arms 31.1 and 31.2 may be inclined with respect to each other at an angle $\beta(a) > 0$. This angle may correspond to the aspect angle of the backbone part 30.1 when viewed from the central axis 24. That means that the arms 31.1 and 31.2 may run on a radial line extending from the central axis 24 and that they are inclined away from each other. The angle of the two arms 31.3 and 31.4 may also be inclined with respect to each other at an angle $\beta(b) < 0$. The negative sign of the angle is meant to indicate that the arms 31.3, 31.4 are inclined towards each other.

The backbone part 30.1, 30.2 and the arms 31.1, ..., 31.4 are resilient in the x-y-plane but relatively stiff in z-direction. Therefore, it is possible that the proof-mass elements 21.1, 21.2 are displaced towards to or away from the central axis 24 and even towards to or away from each other. However, due to the stiffness in z-direction the proof-mass elements cannot independently tilt in z-direction. That means that there is a strong mechanical coupling of the out-of-plane movement of the proof-mass elements 21.1, 21.2.

The resilient elements 25.1 a, 25.1 b may be formed together with the suspension element 23.1 as an integral part in the MEMS-layer. They may have the same thickness (in z-direction) as the proof-mass elements. The resilience in x-y-direction is mainly determined by the geometrical shape in a top plan view (Fig. 3a, b). At this juncture it is to be pointed out that the backbone part 30.1, 30.2 may be longer than the width of the gap 28.1 because the resilient elements are positioned outside of the gap 28.1 and outside of the ring-shaped area that is covered by the proof-mass system.

According to the invention, each proof-mass element 21.1, ..., 21.4 is directly and flexibly connected to an anchor structure on the substrate. This will now be explained with respect to the proof-mass elements 21.1, 21.2 shown in Figs. 2, 3a, 3b. The inner side of the proof-mass element 21.1 (i.e. the rim of the element at radius R1) is connected via the first half of the bracket-shaped resilient element 25.1a to the suspension element 23.1 and the suspension element 23.1 is attached to the central anchor post 22. The inner side of the adjacent proof-mass element 21.2 is connected via the second half of the same bracket-shaped resilient element 25.1a to the suspension element 23.1. While the connection between the first proof-mass element 21.1 and the anchor post 22 on one hand and the connection between the second proof-mass 21.2 and the (common) anchor post 22 is "direct" in the sense of the invention, these two connections are not independent from each other. Therefore, it becomes evident that the proof-mass elements may be connected to the anchor structure independently or dependently from each other. However, there is no proof-mass element that is only connected to an other proof-mass element but not directly to the anchor structure.

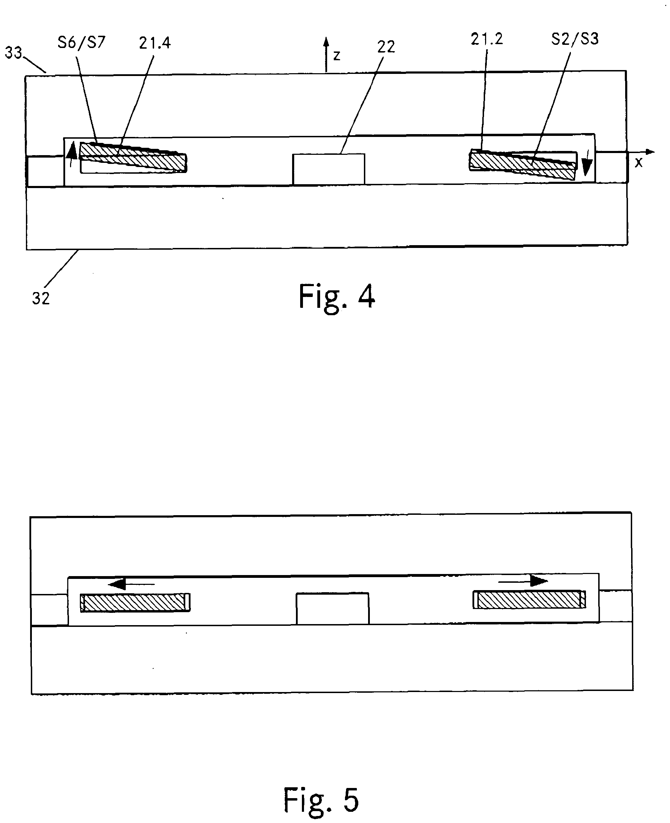

Figs. 4-6 illustrate the displacements that take place depending on the type and direction of acceleration/rotation. The shaded areas show the displacement with respect to the still position. It is to be understood that the sensor device may be subjected to combined linear accelerations and rotations at the same time. As a consequence the displacements in different directions are superposed. There are six degrees of freedom (three linear and three rotational) which all may be detected by the device shown in Fig. 2.

During operation of the sensor device the proof-mass system is kept in a rotational vibration around the central axis 24 by synchronous activation via the four drive electrode structures D1 - D4 with the drive frequency Fd. On one hand, the drive frequency Fd is selected in such a way that it is different from the sensing frequencies Fsx, Fsy, Fsz. On the other hand the in-plane movement sensing frequencies Fsx = Fsy are identical but different from the out-of-plane movement sensing frequency Fsz.

Fig. 4 shows a cross-section in x-z-plane. (The cross-section in y-z-plane looks the same.) The proof-mass elements 21.2, 21.4 are supported at a distance of e.g. 50 - 150 micron above the substrate 32 and are encapsulated in a cavity defined between the substrate 32 and the cap wafer 33. A rotation rate GX oriented in x-direction will generate a swinging movement of the proof-mass elements 21.1 and 21.3 with respect to the y-direction as shown in Fig. 4. This out-of-plane movement is detected by sensor electrodes S2/S3 and S6/S7.

$$GX = (\{S2\} + \{S3\}) - (\{S6\} + \{S7\})$$

wherein

$\{S2\}$ and $\{S3\}$ are electrical signals from two sensor electrodes on the main face of the proof-mass element 21.2,
$\{S6\}$ and $\{S7\}$ are electrical signals from two electrodes on the main face of the opposite proof-mass element 21.4.

Fig. 5 shows the same cross-section as Fig. 4. When a rotation rate in z-direction impacts the sensor, all proof-mass elements 21.1, ..., 21.4 are synchronously displaced in radial direction. In other words, the ring-shaped proof-mass structure is radially moving. This is detected by the sensing electrodes S9 - S12.

$$GZ = (\{S^*12\} - \{S^*10\}) + (\{S^*9\} - \{S^*11\})$$

wherein

$\{S^*12\}$ and $\{S^*10\}$ are demodulated electrical signals from two in-plane interdigitated sensor electrodes S 12 and S10, respectively, of the opposite proof-mass elements 21.1 and 21.3.
$\{S^*9\}$ and $\{S^*11\}$ are demodulated electrical signals from two in-plane interdigitated sensor electrodes S9 and S11, respectively, of the opposite proof-mass elements 21.2 and 21.4.

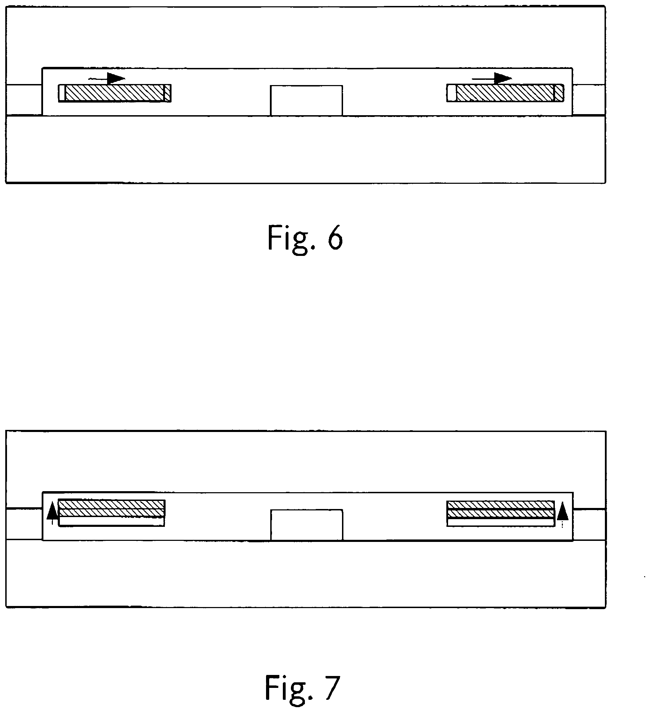

Fig. 6 shows the same cross-section as Fig. 4. When an acceleration in x-direction impacts the sensor all proof-mass elements 21.1, ..., 21.4 are synchronously displaced in x-direction. This is detected by sensing electrodes S10 and S12:

$$AX = (\{S^*9\} + \{S^*11\})$$

wherein

{S*9} and {S*11} are demodulated electrical signals from two in-plane interdigitated sensing electrodes S10 and 12, respectively, of the proof-mass elements 21.3 and 21.1 arranged opposite to each other.

Fig. 7 finally shows the effect of a linear acceleration in z-direction. All proof-mass elements 21.1, ..., 21.4 are synchronously displaced in z-direction. This is detected by sensing electrodes S 1 - S8:

$$AZ = \{S1\} + \{S2\} + \{S3\} + \{S4\} + \{S5\} + \{S6\} + \{S7\} + \{S8\}$$

wherein

{S1} to {S8} are electrical signals from the sensing electrodes S1 to S8 on the main face of the proof-mass elements 21.1, ..., 21.4.

The multiaxial MEMS device using the design shown in Fig. 2 may additionally include the following circuitry:

- closed-loop control circuit generating the drive signal which is injected into the drive electrodes D1 - D4;

- two separate detection circuits evaluating the electrode signals effected by rotation rates in x- and y- direction (GX, GY);

- four demodulation circuits (e.g. with low-pass filters eliminating the drive frequency Fd) for treating the signals of S9 - S12;

- one circuit detecting the rotation rate in z-direction (GZ);

- three detection circuits (with low-pass filters eliminating the drive frequency Fd) detecting the three linear accelerations (AX, AY, AZ).

There may also be compensation circuits, converters, reference-voltage generators etc. as usual for GYRO-type MEMS devices.

According to a preferred embodiment the proof-mass and the suspension system is designed in such a way that the detection frequencies are far above the frequencies of the environment. This means that the amplitude of the rotational vibration generated by the drive electrodes is sufficiently high such that the order of magnitude of the maximum Coriolis accelerations (rotation rates) that are to be detected have the same order of magnitude as the maximum linear accelerations to be detected.

The design of the MEMS device may be based on the following formulas:

$Gcor = 2\ R2\ \Theta\ \omega\ \Omega max$

$Gtang = R2\ \Theta\ \omega^2$

$Gcent = R2\ \Theta^2\ \omega^2$

wherein

Gcor = Coriolis acceleration

Gtan = tangential acceleration at outer periphery (R2) of the proof-mass system

Gcent = centrifugal acceleration

R2 = outer radius of the proof-mass system

Θ = angular amplitude of the rotational vibration generated by the drive electrodes

ω 2 π Fd = angular drive speed (Fd = drive frequency)

Ωmax = maximal angular speed to be measured

It is desirable that the Coriolis acceleration Gcor and the maximum linear acceleration Gmax have the same order of magnitude (i.e. they do not differ by more than factor 10). An example for a set of parameters is:

R2 = 3mm

Θ = 3mrd

ω = 60000 rd/s → F ~ 10 KHz

$200 \leq \Theta \, \omega \leq 1000$ rd /s,

The invention is not limited to the details of the preferred embodiments.

The outer radius of the ring-shaped proof-mass system may be in the range of 1 - 3 mm e.g. R2 = 1.5 mm and the inner radius may be in the range of 0.3 - 0.8 mm, e.g. R1 = 0.5 mm. The inner radius of the drive electrodes D1 - D4 and of the sensing electrodes S9 - S12 may be 0.25 mm. Generally speaking, the overall in-plane dimension of the proof-mass system is normally in the range of 0.2 - 6 mm.

The dimensions of the sensing electrodes S1 - S8 are preferably smaller than the main face area of the respective proof-mass element 21.1, ..., 21.4. This avoids influences of the drive frequency movement on the detection signals.

Instead of placing the drive electrodes D 1, .., D4 and the sensing electrodes D9, ..., D 12 inside the ring-shaped free area between the anchor and the ring-shaped proof-mass system, they may also be placed outside the periphery of the proof-mass system (i.e. in an area beyond R2).

The invention may also be applied to devices where the proof-mass system is supported from the periphery instead of from the centre. It is also conceivable to use a combined peripheral and central suspension.

The resilient elements 25.1a, 25.1b can have a different shape. They may be e.g. semicircular or they may have a meander or wiggly line section for increased flexibility.

While the suspension elements may have the form of a straight beam with constant cross-section, they may also be designed in such a way that the inner and the outer sections 23.1 a, 23.1 b have different resilience in the x-y-plane. The cross-section of the suspension elements may vary from one end to the other. In particular, the outer section 23.1 b of the suspension element may have a changing cross-section depending on the distance to the central axis 24. This may be advantageous for changing or adapting the value of the sensing frequencies Fsy, Fsy, Fsz, Fd. Instead of showing a straight line in the top plan view, the suspension elements may also show an S-shaped or arc-shaped line.

In Fig. 2 the sensing electrodes S1 - S8 cover the whole main surface of the proof-mass elements 21.1, ..., 21.4. However, the sensing electrodes may also be smaller e.g. to provide some area for separate quadrature compensation electrodes into which a signal proportional to the amplitude, which is effected by the drive signal, is injected.

The known technique of providing stopper elements (bumpers) on the mobile and/or on the fixed parts of the device may also be used for the device of the invention. The stoppers make sure that the electrodes do not come into contact when the device is impacted by shocks.

In summary the invention provides a resonator micro-electronic inertial sensor that can be used to detect accelerations and rotation rates with respect to several degrees of freedom.

**Claims**

1. A resonator micro-electronic inertial sensor, preferably a micro-electromechanical system (MEMS) gyro, for detecting linear accelerations and rotation rates in more than one axis comprising:

   a) a proof-mass system (21.1, ..., 21.4) flexibly suspended above a substrate (32) for performing a rotational in-plane vibration about a central axis (24),
   b) wherein said proof-mass system (21.1, ..., 21.4) has more than two proof-mass elements flexibly coupled (25.1a, 25.1 b) to each other,
   c) a drive electrode system (D1, ..., D4) for driving the proof-mass system (21.1, ..., 21.4) to perform said rotational in-plane vibration,

d) a sensing electrode system (S1, ..., S8) connected to the proof-mass system (21.1, ..., 21.4) for detecting linear accelerations or rotation rates in more than one axis,
e) each proof-mass element (21.1, 21.2) is directly and flexibly connected (23.1, 25.1a, 25.1b) to an anchor structure (22) on the substrate (32).
**characterized in that**

2. A resonator micro-electronic inertial sensor according to claim 1, **characterized in that** the proof-mass elements (21.1, ..., 21.4) are arranged in a ring-shaped configuration between an inner and an outer radius (R1, R2) with respect to the central axis (24).

3. A resonator micro-electronic inertial sensor according to claim 1, **characterized in that** the anchor structure (22) to which the proof-mass elements are connected form a one-piece anchor element.

4. A resonator micro-electronic inertial sensor according to claim 2, **characterized in that** the drive electrode system (D1, ..., D4) is arranged in a radial area within the inner radius (R1) of the ring-shaped configuration.

5. A resonator micro-electronic inertial sensor according to claim 1, **characterized in that** the proof-mass system (21.1, ..., 21.4) consists of four proof-mass elements arranged in a rotational symmetry with respect to the central axis (24).

6. A resonator micro-electronic inertial sensor according to claim 1, **characterized in that** the proof-mass elements (21.1, ..., 21.4) are coupled pairwise by resilient elements (25.1a, 25.1b) which allow for individual in-plane movements of the proof-mass elements (21.1, ..., 21.4) but which provide a stiff coupling of out-of-plane movements of the proof-mass elements (21.1, ..., 21.4).

7. A resonator micro-electronic inertial sensor according to claim 1, **characterized in that** there are gaps (28.1, ..., 28.4) between neighbouring proof-mass elements (21.1, ..., 21.4) and **in that** radially oriented suspension elements (23.1, ..., 23.4) for supporting the proof-mass elements (21.1, ..., 21.4) are arranged in the gaps.

8. A resonator micro-electronic inertial sensor according to claims 6 and 7, **characterized in that** the resilient elements (25.1 a, 25.1b) are coupled to the suspension elements (23.1).

9. A resonator micro-electronic inertial sensor according to claims 4 and 6, **characterized in that** the resilient elements (25.1a, 25.1b) have the shape of brackets and are arranged inside the inner radius (R1) or outside the outer radius (R2) of the ring-shaped configuration of the proof-mass elements (21.1, ..., 21.4).

10. A resonator micro-electronic inertial sensor according to claim 1, **characterized in that** the proof-mass elements (21.1, ..., 21.4) are flexibly supported by a suspension system having a rotational symmetry.

11. A resonator micro-electronic inertial sensor according to claim 1, **characterized in that** the sensing electrode system comprises an interdigitated electrode structure (S9, ..., S12) attached to the proof-mass system (21.1, ..., 21.4) for detecting z-axis rotation rates and in-plane accelerations.

12. A resonator micro-electronic gyro according to claim 1, **characterized in that** on each proof-mass element (21.1, ..., 21.4) there are at least two sensing electrodes (S8/S1, S2/S3, S4/S5, S6/S7) for detecting in-plane rotation rates and z-axis accelerations.

13. Method for detecting linear accelerations and rotation rates in more than one axis based on a resonator micro-electronic inertial sensor, preferably a micro-electromechanical system (MEMS) sensor, having:

a) a proof-mass system flexibly suspended above a substrate for performing a rotational in-plane vibration about a central axis,
b) wherein said proof-mass system has more than two proof-mass elements flexibly coupled to each other,
c) a drive electrode system for driving the proof-mass system to perform said rotational in-plane vibration,
d) a sensing electrode system connected to the proof-mass system for detecting linear accelerations or rotation rates in more than one axis,
e) wherein each proof-mass element is directly and flexibly connected to an anchor structure on the substrate. wherein the method comprise applying a drive signal with a frequency Fd to the drive electrode and performing at least one, preferably at least three and most preferably all, of the following detection steps:

f) detecting a rotation rate GX in an in-plane axis direction by determining a difference between the sensing electrode signals from the proof-mass elements opposite to each other:

$$GX = (\{S2\} + \{S3\}) - (\{S6\} + \{S7\})$$

wherein

{S2} and {S3} are electrical signals from two electrodes on a first proof-mass element,
{S6} and {S7} are electrical signals from two electrodes on a second proof-mass element arranged opposite to the first proof-mass element;

g) detecting a rotation rate GY in an in-plane axis direction by determining a difference between the sensing electrode signals from the proof-mass elements opposite to each other:

$$GY = (\{S1\} + \{S8\}) - (\{S4\} + \{S5\})$$

wherein

{S1} and {S8} are electrical signals from two electrodes on a first proof-mass element,
{S4} and {S5} are electrical signals from two electrodes on a second proof-mass element arranged opposite to the first proof-mass element;

h) detecting a rotation rate GZ in an out-of-plane axis normal to in-plane axis by determining a difference between the demodulated sensing electrode signals from the proof-mass elements opposite to each other:

$$GZ = (\{S^*12\} - \{S^*10\}) + (\{S^*9\} - \{S^*11\})$$

wherein

{S*12} and {S*10} are electrical signals from two in-plane detection electrodes on a first and a second proof-mass element arranged opposite to each other,
{S*9} and {S*11} are electrical signals from two in-plane detection electrodes on a third and a fourth proof-mass element arranged opposite to each other,

i) detecting an acceleration AX in an in-plane axis direction by determining a sum of the demodulated sensing electrode signals from the proof-mass elements opposite to each other

$$AX = (\{S^*9\} + \{S^*11\})$$

wherein

{S*9} and {S*11} are electrical signals (demodulated from the vibration frequency Fd) from two in-plane detection electrodes on a first and a second proof-mass element arranged opposite to each other;

j) detecting an acceleration AY (orthogonal to AX) in an in-plane axis direction by determining a sum of the demodulated sensing electrode signals from the proof-mass elements opposite to each other

$$AY = (\{S*10\} + \{S*12\})$$

wherein

{S*10} and {S*12} are electrical signals (demodulated from the vibration frequency Fd) from two in-plane detection electrodes on a first and a second proof-mass element arranged opposite to each other;

k) detecting an acceleration AZ in an out-of-plane axis which is normal to the in-plane axes by determining a sum of the sensing electrode signals from all proof-mass elements:

$$AZ = \{S1\} + \{S2\} + \{S3\} + \{S4\} + \{S5\} + \{S6\} + \{S7\} + \{S8\}$$

wherein

{S1} to {S8} are electrical signals from the electrodes on a the proof-mass elements.

Fig. 1

Fig. 2

Fig. 3a

31.1

21.1

B(a)

L

23.1a

30.1

21.2

25.1a

31.2

Fig. 3b

23.1b

21.1

31.3

25.1b

B(b)

30.2

21.2

31.4

Fig. 4

Fig. 5

Fig. 6

Fig. 7

Europäisches
Patentamt

European
Patent Office

Office européen
des brevets

**EUROPEAN SEARCH REPORT**

Application Number

EP 11 29 0603

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/211257 A1 (GEEN JOHN A [US]) 28 October 2004 (2004-10-28) * paragraphs [0045] - [0056]; figures 4-6 * | 1,12,13 | INV. G01C19/5712 G01P15/18 |
| X | WO 2010/108773 A1 (SENSORDYNAMICS AG [AT]; HAMMER HANNO [AT]) 30 September 2010 (2010-09-30) | 1-8, 10-13 | |
| A | * the whole document * | 9 | |
| X | US 2011/030473 A1 (ACAR CENK [US]) 10 February 2011 (2011-02-10) | 1,3,5,6, 10-13 | |
| A | * paragraphs [0028] - [0044]; figures 2-6 * | 2,4,7-9 | |
| A | EP 1 832 841 A1 (ST MICROELECTRONICS SRL [IT]) 12 September 2007 (2007-09-12) * paragraphs [0001], [0009] - [0046]; figures 1-14 * | 1-13 | |

TECHNICAL FIELDS
SEARCHED (IPC)

G01C
G01P

The present search report has been drawn up for all claims

| Place of search | Date of completion of the search | Examiner |
|---|---|---|
| The Hague | 23 May 2012 | Kuhn, Robert |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 11 29 0603

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2012

| Patent document cited in search report | Publication date | Patent family member(s) | Publication date |
|---|---|---|---|
| US 2004211257 A1 | 28-10-2004 | EP 1618392 A2 | 25-01-2006 |
| | | JP 2006525514 A | 09-11-2006 |
| | | US 2004211257 A1 | 28-10-2004 |
| | | WO 2004097432 A2 | 11-11-2004 |
| WO 2010108773 A1 | 30-09-2010 | CA 2756485 A1 | 30-09-2010 |
| | | CN 102365523 A | 29-02-2012 |
| | | DE 102009001922 A1 | 30-09-2010 |
| | | EP 2411766 A1 | 01-02-2012 |
| | | KR 20110134492 A | 14-12-2011 |
| | | US 2012024056 A1 | 02-02-2012 |
| | | WO 2010108773 A1 | 30-09-2010 |
| US 2011030473 A1 | 10-02-2011 | US 2011030473 A1 | 10-02-2011 |
| | | US 2011031565 A1 | 10-02-2011 |
| EP 1832841 A1 | 12-09-2007 | EP 1832841 A1 | 12-09-2007 |
| | | JP 2007271611 A | 18-10-2007 |
| | | US 2007214883 A1 | 20-09-2007 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5065628 A
- WO 03104823 A
- EP 0547742 B1, Motorola
- WO 2009091966 A
- EP 2113744 A1
- US 20070034007 A
- US 20110340473 A
- US 5025346 A
- US 2011030473 A1
- US 20110030473 A